**Europäisches Patentamt**

**European Patent Office**

**Office européen des brevets**

(19)

(11) Numéro de publication: **0 212 539 B1**

# FASCICULE DE BREVET EUROPEEN

(12)

(45) Date de publication du fascicule du brevet:
**18.10.89**

(51) Int. Cl.⁴: **C03B 7/06**

(21) Numéro de dépôt: **86111122.7**

(22) Date de dépôt: **12.08.86**

(54) Procédé et dispositif pour la régulation thermique d'une masse fluide en mouvement.

(30) Priorité: **14.08.85 CH 3485/85**

(43) Date de publication de la demande:
**04.03.87 Bulletin 87/10**

(45) Mention de la délivrance du brevet:
**18.10.89 Bulletin 89/42**

(84) Etats contractants désignés:
**AT BE DE FR GB IT LU NL SE**

(56) Documents cités:
**FR-A- 2 195 598**
**US-A- 3 010 657**
**US-A- 4 389 725**
**US-A- 4 515 614**

(73) Titulaire: **Glass Advanced Technology Corporation, Via Espana y Calle Columbia Piso 15, Panama City(PA)**

(72) L'inventeur a renoncé à sa désignation

(74) Mandataire: **Blum, Rudolf Emil Ernst et al, c/o E. Blum & Co Patentanwälte Vorderberg 11, CH-8044 Zürich(CH)**

## Description

La présente invention concerne un dispositif de régulation de la température d'une matière fluide s'écoulant à travers une enceinte. L'invention peut en particulier servir à rendre optimale l'homogénéité thermique du verre en fusion avant sa transformation dans des installations produisant des produits manufacturés, tels des feuilles de verre, des fibres de verre pour l'isolation ou le renforcement des plastiques, des corps creux en verre tels que flacons, pots, gobeletterie, etc..

Il est en effet important que la masse de verre en fusion ait une température sensiblement homogène lorsqu'elle atteint la machine de formage qui procède à sa transformation. Or, entre le four et cette machine, le verre en fusion traverse une enceinte ayant en général la forme d'un canal couvert dont les parois sont recouvertes de matière réfractaire.

Par suite des échanges thermiques entre le verre en fusion et le matériaux réfractaire des parois latérales de l'enceinte, les rives du ou des courants de verre en fusion sont refroidies plus rapidement que leurs parties centrales. Ce phénomène est en outre intensifié par le ralentissement du courant de verre en fusion le long de ses rives, par suite du frottement du verre sur le matériau réfractaire des parois latérales de l'enceinte. Il en résulte des différences de température assez sensibles à l'intérieur d'une même section transversale du courant de verre. Le but de la présente invention est de réduire les fluctuations thermiques dans une masse fluide en mouvement, et en particulier celles d'un courant de verre en fusion en transit à travers une enceinte. Dans ce dernier cas, la forme de l'enceinte peut varier en fonction du débit de verre en fusion et des moyens d'alimentation des machines de formage du verre placés en aval de l'enceinte.

Par exemple dans l'industrie du verre plat cette enceinte a généralement la forme d'un canal couvert qui peut avoir environ 10 m de largeur, 20 m de longueur, 1m de profondeur et débiter journellement plusieurs centaines de tonnes de verre.

Dans les industries du verre creux (bouteilles, flacons, pots, gobelets) et de la fibre de verre, le canal principal a généralement une largeur inférieure à 2 m et alimente des canaux secondaires appelés feeders, dont la largeur est habituellement inférieure à 1,5 m. Ces canaux secondaires délivrent le verre en fusion à diverses machines de transformation. Une variante de canal principal est constituée par une enceinte sensiblement semi-cylindrique qui peut alimenter des canaux secondaires disposés radialement. Dans ce cas cette enceinte est généralement appelée avant-bassin. Dans une autre variante le canal principal est constitué par une enceinte rectangulaire.

Quelle que soit la géométrie de l'enceinte en question, il est connu d'équiper sa couverture d'ouvertures réglables pour une évacuation des gaz chauds qui provoque le refroidissement par convection de la matière en fusion. A cet effet les ouvertures sont équipées de volets mobiles dont le déplacement vertical ou le basculement permet de régler la section par laquelle s'échappent les gaz chauds en fonction du refroidissement désiré.

(Brevet britannique 355 555 et brevet des Etats-Unis 1 900 361.) Comme le courant de verre en fusion parcourant le canal tend naturellement à se refroidir plus sur les bords qu'au centre du canal, le brevet US-A 4 515 614 décrit des moyens pour mesurer la température du verre en fusion en plusieurs points d'un plan transversal à son courant, ainsi que des unités de chauffage agencées pour chauffer de manière indépendante et en fonction des températures mesurées diverses veines de ce courant, afin d'homogénéiser la température transversalement au canal. Le brevet US-A 3 010 657 propose la mesure de la température en deux points et prévoit des brûleurs pour le chauffage.

Pour le refroidissement il prévoit non seulement des ouvertures réglables pour l'évacuation des gaz chauds, mais aussi un système de refroidissement forcé par convection pour amener de l'air frais lorsqu'il est nécessaire d'abaisser la température du verre en fonction des valeurs mesurées.

De façon générale, le réglage des sources de refroidissement et de chaleur est effectué empiriquement, à partir d'observations ou de mesures faites à partir d'un réseau unidimensionnel ou bidimensionnel, de points de mesure. Or l'information ainsi obtenue est insuffisante pour régler efficacement la température non seulement par variation de l'énergie thermique délivrée par différents organes de chauffage et par variation de la chaleur évacuée par convection, mais aussi en variant la section d'ouvertures qui règlent l'évacuation de chaleur par radiation et permettent ainsi une action ponctuelle apte à obtenir et à maintenir une température homogène transversalement à la direction du courant. Etant donné que la conductibilité thermique du verre en fusion est fonction de sa température, toute différence de température à l'intérieur du verre peut, dans certaines conditions, contribuer à renforcer encore l'inhomogénéité existante, ce qui rend particulièrement désirable la possibilité d'influencer ponctuellement la température en fonction d'une information la plus complète possible. Ceci est réalisé au moyen de l'invention telle que définie aux revendications 1, 7 et 15.

Dans l'industrie du verre plat où la largeur du canal peut dépasser 10 m on pourra disposer plusieurs séries d'ouvertures suivant des axes parallèles à l'écoulement du verre. Il en sera de même dans le cas des canaux principaux utilisés dans les industries du verre creux et de la fibre de verre. Dans le cas d'une enceinte semi-circulaire il sera préférable de disposer les ouvertures en éventail et de les aligner avec certaines veines d'écoulement du verre. Dans le cas d'un canal secondaire une seule série d'ouvertures pourra être disposée au-dessus de son axe. Dans le cas d'un canal couvert, comportant des brûleurs, il sera avantageux de prévoir des éléments réfléchissant préférentiellement la chaleur émise sur le fluide par des brûleurs proches des parois de l'enceinte.

L'invention sera maintenant illustrée par la description de formes de réalisation et à l'aide du dessin, dans lequel

la figure 1 est une vue schématique partielle en plan d'un dispositif selon la présente invention,

la figure 2 est une vue suivant la coupe longitudinale A-A de la figure 1,

la figure 3 est une vue suivant la coupe transversale B-B de la figure 2,

la figure 4 est une vue schématique partielle en plan d'un second mode d'exécution,

la figure 5 est une vue suivant la coupe transversale C-C de la figure 4,

la figure 6 est une vue suivant la coupe transversale D-D de la figure 5,

la figure 7 représente en plan partiel un des canaux secondaires de la figure 6,

la figure 8 représente ce même canal en coupe longitudinale partielle,

la figure 9 représente ce même canal en coupe transversale,

la figure 10 est une vue, partiellement arrachée d'une canne pyrométrique, et

la figure 11 est une coupe de cette même canne.

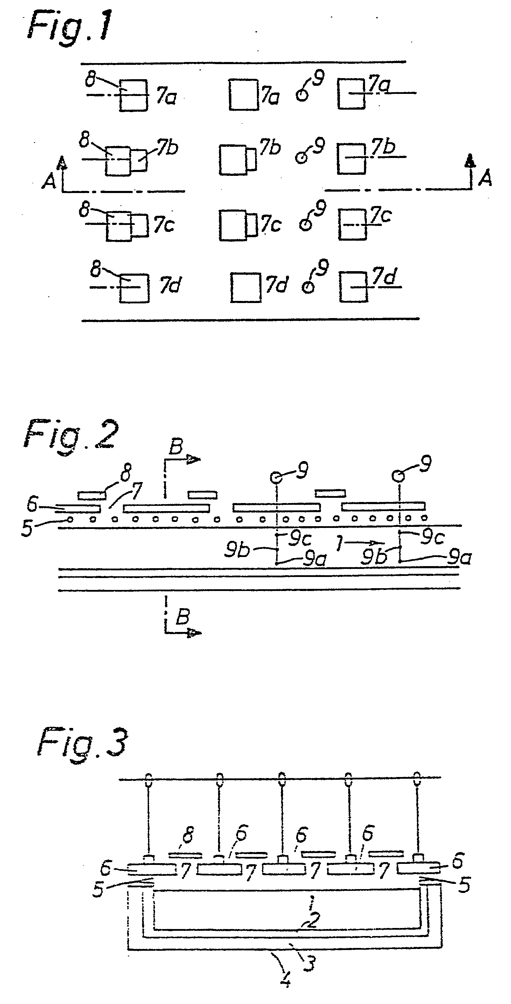

En se référant en particulier aux figures 2, 3 et 8, le verre en fusion, désigné par la référence 1, s'écoule à travers un canal 2 en matière réfractaire. Entre ce canal 2 et une carcasse métallique 4 sont intercalées des matières isolantes 3. Le canal 2 est recouvert sur toute sa longueur par des dalles de couverture 6, également en matériaux réfractaire, suspendues selon une technique bien connue.

Les dalles de couvertures 6 comportent à intervalles réguliers des ouvertures 7 réparties suivant des lignes parallèles au plan axial du canal. Au-dessus de chacune de ces couvertures 7 se trouve un volet 8 se mouvant horizontalement parallèlement au plan axial du canal et qui permet d'augmenter ou de réduire la section de l'ouverture 7 par laquelle s'échappe le flux thermique émis par la surface du verre en fusion. Ce flux détermine un refroidissement du verre qui se transmet progressivement de la surface vers la sole, suivant une relation fonction de la composition chimique du verre, de sa température, de sa vitesse d'écoulement, de la profondeur du courant de verre et du degré d'ouverture des volets 8.

La température du verre à différentes profondeurs est mesurée au moyen de cannes pyrométriques 9 dont chacune renferme plusieurs thermocouples 9a, 9b, 9c. A partir de l'ensemble de ces mesures on détermine individuellement le degré d'ouverture de chacune des ouvertures 7a-7d permettant d'obtenir une répartition de température optimale. Cette détermination peut se faire soit manuellement soit de préférence en commandant les volets à partir de signaux émis par les thermocouples et par l'intermédiaire de circuits digitaux. Grâce au fait que chaque ouverture est commandée tant en fonction de sa position, latérale et longitudinale, au-dessus du canal, qu'en fonction d'un ensemble de températures mesurées à la surface du verre en fusion et à différentes profondeurs à l'intérieur de celui-ci, il est possible de réaliser un réglage différencié des ouvertures conduisant à une homogénéisation optimale de la température du verre dans les plans transversaux au courant. Ainsi, compte tenu de leur proximité des parois latérales, les ouvertures 7a et 7d seront plus fermées que les ouvertures 7b et 7c. On refroidira ainsi moins le verre s'écoulant le long des parois que celui proche du plan axial du canal.

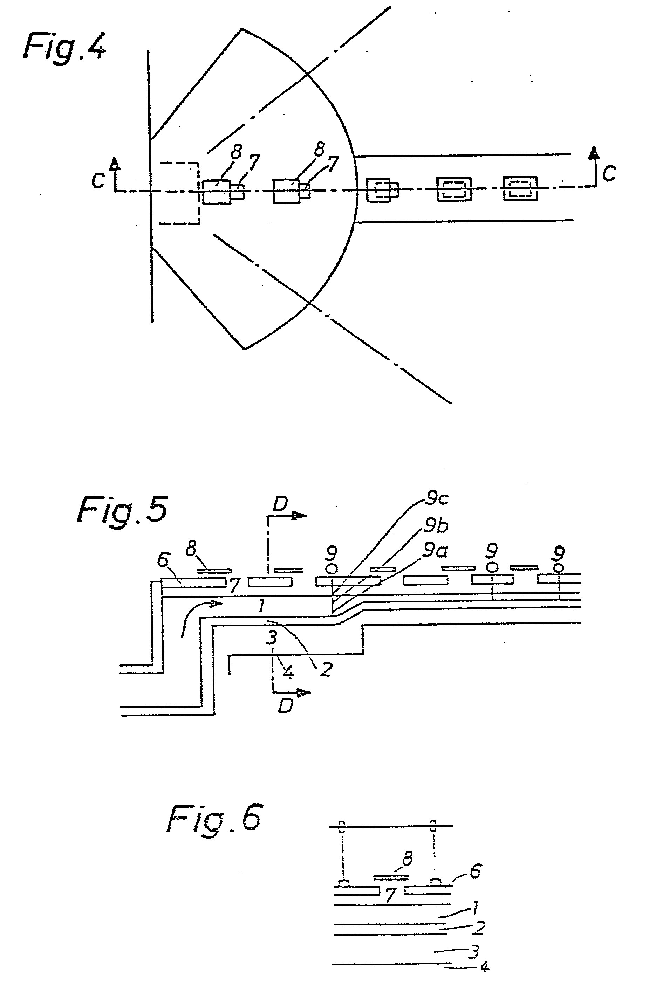

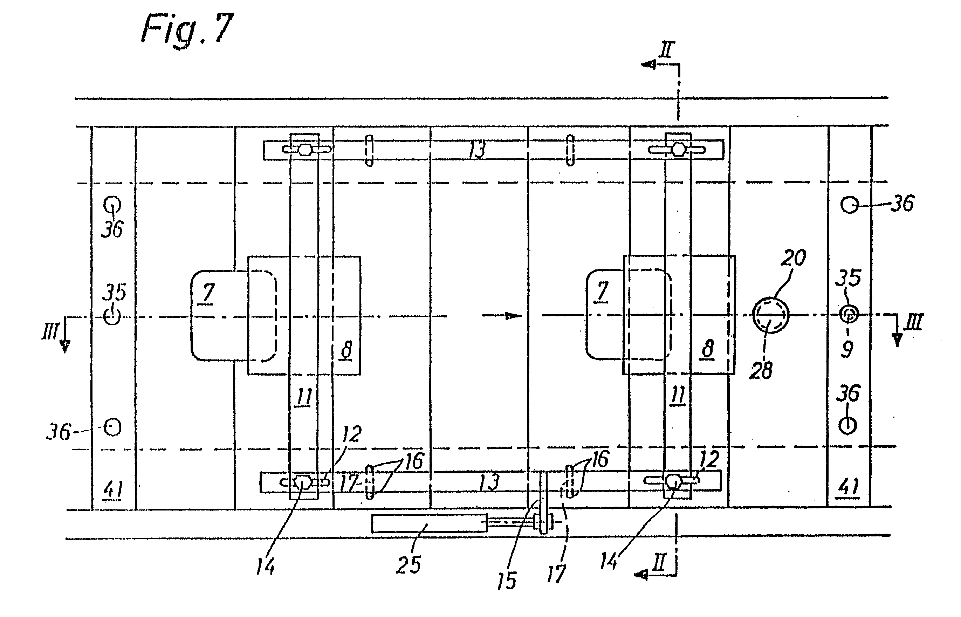

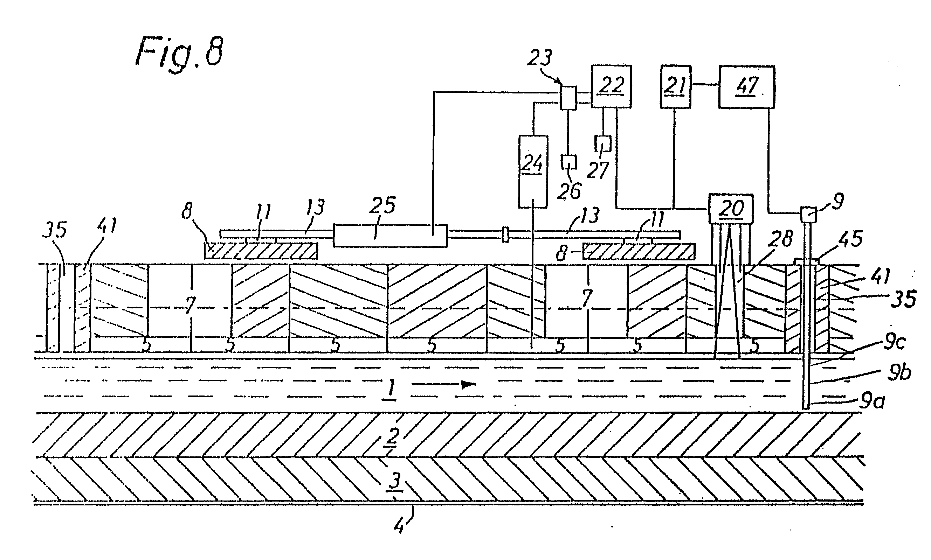

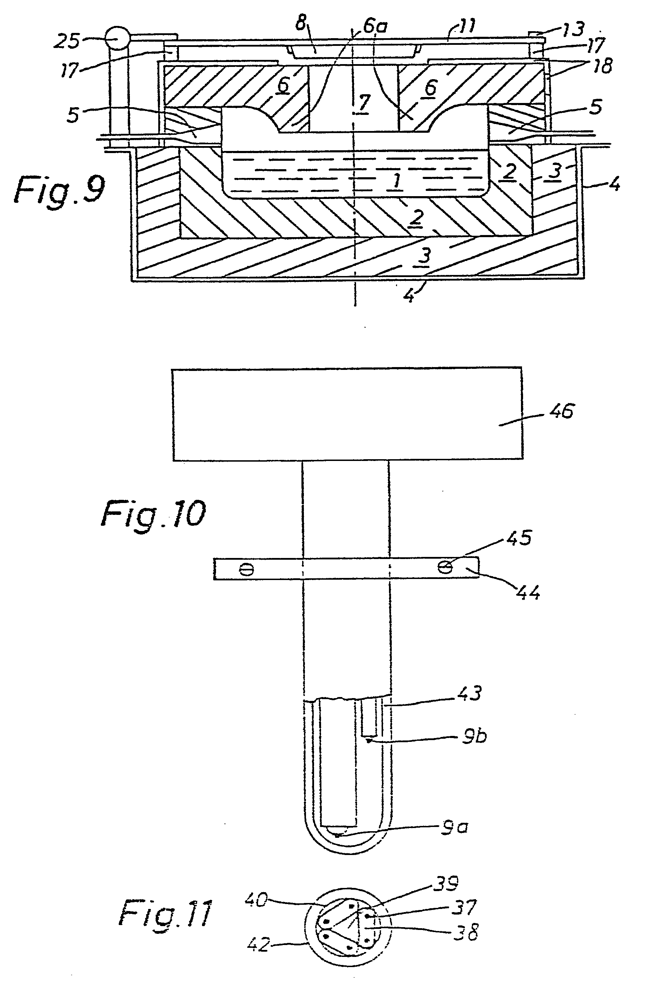

On se réfère maintenant plus particulièrement aux figures 4 à 9 qui illustrent une forme d'exécution adaptée à une enceinte composée d'un avant-bassin essentiellement semi-circulaire, auquel sont rattachés plusieurs canaux secondaires disposés en éventail. L'exemple de la figure 4 comporte trois canaux secondaires, dont un seul est représenté au dessin et décrit plus en détail à l'aide des figures 7 à 9, qui resteraient également valable pour les autres canaux. Après sa remontée de la gorge du four (non-représenté) le verre en fusion 1 se répartit en autant de veines dans l'avant-bassin qu'il existe de canaux secondaires rattachés radialement à celui-ci. Dans l'avant-bassin le verre est au contact de matières réfractaires 2 isolées thermiquement par des matières isolantes 3, elles-mêmes maintenues par une ossature métallique 4. L'enceinte est entièrement recouverte de dalles de couvertures 6 comportant à intervalles réguliers des ouvertures 7 réparties suivant les axes radiaux suivis par les veines du verre. Au-dessus de chacune de ces ouvertures 7 se trouve un volet 8 mobile horizontalement et parallèlement aux axes radiaux précités. Le réglage manuel ou automatique des volets 8 permet d'augmenter ou de réduire la section des ouvertures 7 par lesquelles s'échappe le flux thermique émis par le surface du verre en fusion. Par ailleurs des cannes pyrométriques - dont chacune comporte plusieurs thermocouples 9a, 9b, 9c placés à des profondeurs différentes - sont implantées sur chaque veine de verre pour y mesurer les températures dont on déduit ensuite le degré d'ouverture optimal pour chaque volet 8.

Dans ce qui suit, on se réfère plus particulièrement aux figures 7 à 9, les chiffres de référence restant les mêmes que précédemment pour des organes ayant essentiellement la même fonction. Les figures 8 et 9 montrent des brûleurs à combustible gazeux ou liquide 5 qui sont intégrés dans les parois latérales du canal 2 au-dessus du niveau du verre en fusion. Chacun de ces brûleurs 5 possède une bouche divergente dans laquelle s'épanouit la flamme produite par la combustion du mélange air-combustible. La chaleur produite par le rayonnement des flammes se transmet du bloc des brûleurs 5 au bord du canal 2 au courant de verre en fusion 1 et à la dalle de couverture 6 dont la face inférieure comporte, de préférence, une saillie longitudinale 6a en face de chacune des rangées de brûleurs 5, pour réfléchir le rayonnement des flammes sur les rives du courant de verre en fusion. En sus de cette répartition par rayonnement, des courants de convexion de gaz chauds s'établissent dans les deux couloirs latéraux délimités par les saillies 6a, les blocs brûleurs 5, les bords du canal 2 et le verre 1. Ces courants intensifient l'échauffement des rives du courant de verre en fusion. Cet échauffement préférentiel des rives est par ailleurs favorisé par un calorifugeage des bords latéraux de la dalle de couverture 6 au moyen de refractaires 18. Comme auparavant, la dalle 6 comporte à intervalles réguliers des ouvertures 7 dans sa partie axiale. Audessus de chacune de ces ouvertures 7 se trouve un volet coulissant 8 permettant d'augmenter ou de réduire la section du flux thermique émis par le verre.

L'installation est divisée longitudinalement en sections séparées par des panneaux 41. Les volets 8 d'une même section sont solidaires d'une châssis métallique qui comprend des barres transversales 11 reliées de façon ajustable à deux barres longitudinales 13. L'ajustement entre les barres 11 et 13 est réalisé par l'intermédiaire de trous oblongs 12 dans les barres 13 et au moyen de boulons de fixation 14 engagés à travers ces trous 12 pour assurer la liaison entre les barres 11 et 13. Cette liaison réglable entre les barres 11 et 13 permet de modifier les positions relatives des différents volets 8 solidaires d'un même châssis métallique. On peut ainsi échelonner l'amplitude de la fermeture ou de l'ouverture des ouvertures 7 au moyen des volets 8 suivant le sens d'écoulement du verre en fusion. En effet, lorsque la température du verre décroît, sa conductibilité thermique diminue. Plus le verre sere chaud, plus il sera facile de la refroidir sans accentuer l'hétérogénéité thermique dans sa masse. Par contre, plus le verre sera froid, plus il faudra limiter son refroidissement si l'on ne veut pas accentuer le gradient thermique entre le verre de surface et le verre sous-jacent.

Pour permettre le déplacement longitudinal du cadre formé par les barres 11 et 13, les barres longitudinales 13 sont montées sur des galets de roulement 17 (fig. 9), tandis qu'un vérin pneumatique ou électrique 25 agit sur un bras 15 solidaire de l'une des barres 13 pour déplacer les volets 8 dans un sens ou dans l'autre et augmenter ou diminuer ainsi les sections des ouvertures 7.

Le déplacement des volets 8 d'une part et l'action des brûleurs 5 d'autre part est commandé par un circuit de régulation qui sera décrit en détail en référence à la figure 8 et dont l'organe de base est une série de pyromètres à radiation 20 qui mesurent la température de surface du verre en fusion sur l'axe central d'écoulement. Ces pyromètres 20 sont montés sur la dalle 6, de préférence à raison d'un pyromètre par section, au dessus d'un trou cylindrique 28 d'observation percé dans la dalle 6. La température de surface mesurée par chaque pyromètre 20 est transformée en un signal de mesure qui est enregistré dans un enregistreur 21 et traité dans un comparateur 22 qui compare les signaux de mesure à des signaux de consigne issus d'une mémoire 27. Les signaux de consigne sont programmés manuellement ou par calculateur et correspondent à la température optimale du verre. En fonction du résultat de la comparaison entre les signaux de consigne et les signaux de mesure, le comparateur 22 pourra déclencher soit des signaux de commande pour un circuit 23 qui commande la vérin 25 pour augmenter ou réduire la section ouverte des ouvertures 7, soit des signaux de commande qui actionnent une vanne 24 servant à augmenter ou à réduire l'intensité des brûleurs 5. Cette régulation automatique se poursuit jusqu'à ce que la température observée par le pyromètre à radiation 20 coïncide avec la température de consigne mémorisée dans la mémoire 27. Ces valeurs seront de préférence simultanément affichées sur un dispositif adéquat, non montré au dessin.

Lorsqu'il n'est pas nécessaire de refroidir la région axiale du courant de verre en fusion 1, les volets 8 peuvent recouvrir complètement les ouvertures 7, à l'exception d'une fente pour l'échappement des gaz de combustion. On remarquera que la largeur des sections d'aération 7 représente environ un tiers de la largeur du canal.

Lorsque les volets 8 recouvrent les ouvertures 7 le rayonnement émis par le verre est réfléchi par ces volets. Par contre, lorsqu'ils sont ouverts, le rayonnement émis par le verre n'est pas réfléchi, ce qui refroidit le verre le long d'une bande axiale représentant environ un tiers de la largeur totale de la surface du verre en fusion.

L'intensité de ce refroidissement dépend évidemment du degré d'ouverture des volets 8. Ce refroidissement axial du verre augmente sa viscosité et freine par conséquent la vitesse de son écoulement, ce qui se traduit par une accélération relative de l'écoulement du verre le long des rives et une diminution de son refroidissement dans les régions latérales. C'est ainsi qu'on a pu mesurer dans la région médiane des températures de surface inférieures à celles du verre dans les régions latérales.

Il existe une relation entre l'échauffement ou le refroidissement du verre en fusion en surface et la transmission calorifique dans la masse du verre. Cette transmission dépend de la composition chimique du verre, de sa température, de la profondeut considérée, de la vitesse d'écoulement, etc... Pour tenir automatiquement compte de ces différents facteurs, il est avantageux de prévoir des moyens pour asservir automatiquement la température de consigne en fonction de la repartition de la température dans la masse de verre en fusion. A cet effet, on a prévu dans l'alignement de chacun des panneaux 41 qui délimitent les sections longitudinales, plusieurs points de mesure de la température. Dans l'exemple représenté, les panneaux comportent deux trous latéraux 36 et un trou central 35, dans lesquels sont montés des cannes pyrométriques 9 permettant la mesure de la température à différents niveaux dans la masse du verre en fusion. Dans l'exemple représenté ce sont les trois niveaux 9a, 9b, 9c. Les mesures fournies par chaque canne pyrométrique 9 sont traitées dans un calculateur 47 et les valeurs ainsi obtenues servent à ajuster automatiquement les températures de consigne dans la mémoire 27 en fonction des températures mesurées dans la masse du verre en fusion. Cet asservissement de la température de consigne permet en particulier d'optimaliser l'homogénéité thermique verticale dans ladite masse.

Par ailleurs, étant donné la durée de vie souvent incertaine des instruments de mesure plongés dans un environnement hostile tel un courant de verre en fusion, il est parfois avantageux, voire essentiel, de disposer de moyens d'alarme avertissant lorsqu'un circuit de mesure ne fonctionne plus correctement. Pour éviter que les indications erronées fournies par un tel circuit ne dérèglent toute la régulation de température, ce qui peut avoir des suites graves, il est désirable que ces indications soient ignorées dès que possible par les circuites d'asservissement. Ces résultats (déclenchement d'un signal d'attention et mise hors service d'une unité de mesure donnant des indications douteuses) peuvent être facilement obtenus dans une installation selon l'invention. En effet, pour des raisons purement thermodynamique, l'ensemble des températures mesurées en de nombreux points de mesure tout en excluant un point particulier, détermine un intervalle à l'intérieur duquel la température de ce dernier point doit nécessairement se trouver. On peut donc prévoir un circuit de calcul qui détermine pour chaque point de mesure l'intervalle maximal des valeurs que pourrait prendre - dans les cas extrêmes - la température en ce point, en tenant compte d'un ensemble de températures mesurées ailleurs, soit en tous les points disponibles soit uniquement en certains d'entre eux. Dans ce dernier cas il s'agira en général de points situés au voisinage du point à contrôler. Un circuit de surveillance sera alors agencé pour émettre un signal d'avertissement dès qu'une unité de mesure affectée à un point à contrôler émet un signal correspondant à une température qui sort de la plage de valeurs possibles en ce point en tenant complte des contraintes dues à un ensemble de valeurs mesurées ailleurs. Dans ce cas, le circuit de surveillance pourra en outre soit mettre ladite unité de mesure hors service de manière à ce qu'elle n'influe plus sur la régulation, soit affecter le signal qu'elle émet d'un coefficient de pondération réduisant de manière prédéterminée son influence sur la régulation et pouvant devenir nul le cas échéant. On choisira plutôt la première alternative si l'on s'attend à une brusque détérioration des unités de mesure, et la seconde si cette détérioration tend à être progressive.

Les figures 10 et 10A illustrent un mode de réalisation avantageux d'une canne pyrométrique 9 pour le dispositif illustré par les figures 1 à 9. Cette canne pyrométrique 9 comporte trois thermocouples 9a, 9b et 9c (dont le dernier n'est pas représenté sur la fig. 10) situés à des niveaux différents. Chaque thermocouple est constitué par un fil de platine rhodié 6 % et un fil de platine rhodié 30 %. La soudure de ces deux fils constitue le thermocouple produisant la force électromotrice qui représente la température du milieu dans lequel baigne le thermocouple. Chaque fil de platine rhodié 37 est isolé du fil adjacent par un capillaire 38 en alumine. L'ensemble des six capillaires est scellé avec un ciment alumineux 39 à l'intérieur d'un tube borgne 40 en alumine. Ce tube en alumine 40 est protégé de l'érosion due au verre en fusion dans lequel il est plongé par un second tube borgne 42 en platine rhodié. La longueur de ce tube 42 ist, de préférence, réduite au minimum en le sertissant dans des encoches 43 pratiquées dans le tube en alumine 40 au-dessus de la surface du verre en fusion.

Le tube 40 est serré dans un collier 44 qui repose sur la face supérieure du panneau 41 et qui détermine la profondeur de l'immersion. Deux vis de fixation 45 permettent de modifier la profondeur d'immersion de la canne 9.

La partie supérieure de la canne 9 est constituée par une tête de mesure 46 scellée au tube 40. A l'intérieur de cette tête de mesure 46 se trouvent les bornes de raccordement des trois thermocouples.

**Revendications**

1. Procédé pour réguler à partir de plusieurs mesures de température la répartition de la température dans une masse fluide (1) coulant à l'intérieur d'une enceinte (2) et ayant une température supérieure à celle qui règne à l'extérieur de celle-ci, consistant à utiliser des sources de chaleur (5) réparties dans l'enceinte et/ou dans l'épaisseur de ses parois (2, 3), à mesurer de façon répétée la température locale du fluide aux nœuds d'un réseau tridimensionnel de points de mesure (9a, 9b, 9c) et à utiliser les valeurs déterminées à partir de l'ensemble de ces mesures pour régler de manière individuelle les sections passantes pour le rayonnement thermique à travers plusieurs ouvertures (7a, 7b, 7c, 7d) à sections variables réparties dans le plafond (6) de l'enceinte et/ou les puissances thermiques des sources de chaleur.

2. Procédé selon la revendication 1, utilisant un réseau à mailles essentiellement parallélépipédiques ayant un axe orienté dans le sens des veines du liquide.

3. Procédé selon une des revendications précédentes, certains nœuds du réseau étant situés à la surface du fluide et la température en ces nœuds mesurée au moyen de pyromètres à radiation (20).

4. Procédé selon une des revendications précédentes, lesdites sections et/ou puissances thermiques étant réglées en fonction des différences de température observées entre certains points de mesure et des endroits situés sensiblement sur la même veine de fluide que le point de mesure correspondant, en amont et/ou en aval de celui-ci.

5. Procédé selon une des revendications précédentes, lesdites sections et/ou puissances thermiques étant réglées en fonction des différences de température observées entre certains points de mesure et des endroits situés sensiblement sur la même surface orthogonale aux veines de fluide que le point de mesure correspondant.

6. Procédé selon une des revendications précédentes, la régulation étant effectuée de manière à ce que les différences de température dans le sens des veines du courant et transversalement à celles-ci soient égales ou inférieures à certaines valeurs de consigne.

7. Dispositif pour la mise en œuvre du procédé selon la revendication 1 pour l'homogénéisation thermique d'une matière en fusion (1) s'écoulant à travers une enceinte (2) recouverte d'une dalle (6) ayant des ouvertures (7) munies de volets (8) mobiles horizontalement, le dispositif comportant des brûleurs (5) aménagés dans les parties latérales de l'enceinte au-dessus du niveau de la matière en fusion ainsi que des organes de chauffage placés dans cette matière et/ou dans l'épaisseur des parois de l'enceinte, des moyens pour mesurer la température de la matière en fusion aux nœuds d'un ré-

seau tridimensionnel de points de mesure (9a, 9b, 9c), et un circuit électrique du régulation commandant le degré d'ouverture des volets ainsi que la puissance thermique des brûleurs et des organes de chauffage en fonction des mesures faites.

8. Dispositif selon la revendication 7, avec des volets (8) montés, séparément ou par groupes, dans des châssis mobiles reposant sur la dalle (6) par l'intermédiaire de galets (17) et actionnés par au moins un vérin (25).

9. Dispositif selon une des revendications 7 ou 8, avec des cannes de mesure pyrométrique (9) montées dans la dalle (6) et plongeant dans la matière en fusion.

10. Dispositif selon la revendication 9, dans lequel certaines cannes comportent plusieurs thermocouples (9a, 9b, 9c) disposés à des niveaux différents.

11. Dispositif selon une des revendications 9 ou 10, dans lequel plusieurs cannes (9) sont montées sur un même panneau (41) placé transversalement par rapport à la dalle et portant une canne centrale et deux cannes latérales.

12. Dispositif selon une des revendications 9 à 11, dans lequel au moins une canne (9) comporte un tube borgne (42) en platine rhodié serti dans au moins une encoche ménagée dans un tube coaxial intérieur (40) en alumine qu'il protège de l'érosion et qui enferme au moins un thermocouple.

13. Dispositif selon une des revendications 7 à 12, avec des pyromètres à radiations (20) fixés à la dalle (6) de manière à mesurer la température superficielle de la matière en fusion.

14. Dispositif selon une des revendications 7 à 13, dans lequel le circuit de régulation est agencé de manière à pondérer par un facteur inférieur à 1 et pouvant devenir nul les signaux émis par l'un quelconque des moyens de mesure lorsque ces signaux sortent d'une première plage déterminée par l'ensemble de toutes les autres valeurs mesurées, et à déclencher un signal d'attention lorsque lesdits signaux sortent d'une seconde plage contenant au moins la première.

15. Application du procédé selon la revendication 1 à l'homogénéisation de la température de verre en fusion s'écoulant le long d'un canal en matière réfractaire.

**Patentansprüche**

1. Verfahren, um anhand mehrerer Temperaturmessungen die Temperaturverteilung in einer Schmelze (1), die in einem abgegrenzten Raum (2) fliesst und eine höhere Temperatur aufweist, als in dessen Umgebung herrscht, zu regulieren, welches Verfahren darin besteht, Wärmequellen (5) zu verwenden, die innerhalb des Raumes und/oder seiner Wandungen (2, 3) liegen, wiederholt die lokale Temperatur der Flüssigkeit in den Knotenpunkten eines dreidimensionalen Netzes von Messpunkten (9a, 9b, 9c) zu messen, und die aus der Gesamtheit dieser Messungen abgeleiteten Werte zu benützen, um die freien Querschnitte für den Durchgang der thermischen Strahlung durch mehrere in der Decke (6) des Raumes angebrachten Öffnungen (8a, 7b, 7c, 7d) mit veränderlichem Querschnitt und/oder die thermischen Leistungen der Wärmequellen einzeln zu steuern.

2. Verfahren nach Anspruch 1, welches ein Netz mit im wesentlichen parallelepipedischen Maschen verwendet, deren eine Achse in Richtung der Stromlinien der Schmelze orientiert ist.

3. Verfahren nach einem der vorangehenden Ansprüche, wobei sich bestimmte Knotenpunkte des Netzes an der Oberfläche der Flüssigkeit befinden, und die Temperatur in diesen Punkten durch Strahlungspyrometer (20) gemessen wird.

4. Verfahren nach einem der vorangehenden Ansprüche, wobei besagte Querschnitte und/oder thermische Leistungen in Abhängigkeit der Temperaturdifferenzen geregelt werden, die zwischen gewissen Messpunkten und zugehörigen, stromaufwärts oder -abwärts, und jeweils im wesentlichen auf derselben Stromlinie wie der Messpunkt befindlichen Orten herrschen.

5. Verfahren nach einem der vorangehenden Ansprüche, wobei besagte Querschnitte und/oder thermische Leistungen in Abhängigkeit der Temperaturdifferenzen geregelt werden, die zwischen gewissen Messpunkten und zugehörigen, jeweils auf derselben zu den Stromlinien orthogonalen Fläche wie der Messpunkt befindlichen Orten herrschen.

6. Verfahren nach einem der vorangehenden Ansprüche, wobei die Regulierung so durchgeführt wird, dass die Temperaturdifferenzen längs der Stromlinien und transversal dazu gleich oder kleiner als bestimmte, vorgegebene Sollwerte sind.

7. Vorrichtung zur Durchführung des Verfahrens nach Anspruch 1 für die thermische Homogenisierung einer Schmelze (1), die durch einen abgegrenzten Raum (2) fliesst, der durch eine mit Öffnungen (7) versehenen Platte (6) bedeckt ist, welche Öffnungen mit horizontal beweglichen Schiebern (8) versehen sind, wobei die Vorrichtung sowohl Brenner (5), die in den seitlichen Teilen des Raumes über der Oberfläche der Schmelze angebracht sind, wie auch in der Schmelze und/oder innerhalb der Wandung des Raumes angeordnete Heizelemente aufweist, mit Mitteln, um die Temperatur der Schmelze in den Knotenpunkten eines dreidimensionalen Netzes von Messpunkten (9a, 9b, 9c) zu messen, und mit einem elektrischen Regelkreis der den Öffnungsgrad der Schieber sowie die thermische Leistung der Brenner und der Heizelemente in Abhängigkeit der durchgeführten Messungen steuert.

8. Vorrichtung nach Anspruch 7, bei welcher die Schieber (8), einzeln oder gruppenweise, in beweglichen Rahmen montiert sind, die mittels Rollen (17) auf der Platte (6) ruhen und durch mindestens einen Antrieb (25) angetrieben werden können.

9. Vorrichtung nach einem der Ansprüche 7 und 8, mit in der Platte (6) montierten, für pyrometrische Messungen eingerichteten Stäben (9), welche in die Schmelze tauchen.

10. Vorrichtung nach Anspruch 9, in welcher gewisse Stäbe mehrere, in verschiedenen Höhen angebrachte Thermoelemente (9a, 9b, 9c) aufweisen.

11. Vorrichtung nach einem der Ansprüche 9 oder 10, in welcher mehrere Stäbe (9) auf ein und derselben Wandung (41) montiert sind, die quer zur Platte angebracht ist, und eine zentrale, sowie zwei seitliche Stäbe trägt.

12. Vorrichtung nach einem der Ansprüche 9 bis 11, in welcher mindestens ein Stab (9) ein aus rhodiniertem Platin bestehendes, einseitig geschlossenes Rohr (42) aufweist, das in mindestens einer Rille eines aus Aluminiumoxyd gefertigten und mindestens ein Thermoelement enthaltenden koaxialen Innenrohres (40) eingebördelt ist, um es vor der Erosion zu schützen.

13. Vorrichtung nach einem der Ansprüche 7 bis 12, mit an der Platte (6) befestigten Strahlungspyrometern (20), um die Oberflächentemperatur der Schmelze zu messen.

14. Vorrichtung nach einem der Ansprüche 7 bis 13, in welcher der Regelkreis eingerichtet ist, um die von irgendeinem Messorgan abgegebenen Signale mit einem Faktor zu multiplizieren, der kleiner als eins ist und gleich null werden kann, falls diese Signale ausserhalb eines gewissen, durch die Gesamtheit aller anderen Messwerte bestimmten ersten Intervalles zu liegen kommen, und um ein Warnsignal auszulösen, falls diese Signale ausserhalb eines zweiten Intervalles, welches mindestens das erste enthält, zu liegen kommen.

15. Anwendung des Verfahrens nach Anspruch 1, für die Homogenisierung der Temperatur eines längs einer aus feuerfestem Material gefertigten Kanales fliessenden Glasschmelze.

## Claims

1. Method for regulating, on the base of several temperature measurements, the temperature distribution in a fluid medium (1) which flows in an enclosure (2) and has a temperature higher than that outside the enclosure, where one uses heat sources (5) distributed within the enclosure and/or recessed in its walls (2, 3), where one repeatedly measures the local temperatures of the fluid at the nodes of a three-dimensional grid of measuring points (9a, 9b, 9c), and where one uses values based on the ensemble of these measures for commanding severally the cross sections open for the passage of thermal radiation of several apertures with variable widths provided in the ceiling (6) of the enclosure and/or for commanding the thermal output of several heat sources.

2. Method according to claim 1, which uses a grid with essentially parallelepipedic meshes, one axis of which is oriented in the direction of the flow lines of the fluid.

3. Method according to claim 1 or 2, where a number of nodes of the grid lie at the surface of the liquid, and where the temperature at these nodes is determined by means of radiation pyrometers (20).

4. Method according to any preceding claim, where one regulates said open cross sections and/or said thermal outputs as a function of temperature differences observed between certain measuring points and points situated essentially on the same flow line of the fluid as the corresponding measuring point, upstream and/or downstream of the latter.

5. Method according to any preceding claim, where one regulates said open cross sections and/or said thermal outputs as a function of temperature differences observed between given measuring points and points situated essentially on the same surface orthogonal to the flow line of the fluid as the corresponding measuring point.

6. Method according to any preceding claim, where one commands the open cross sections of the apertures and/or the output of the heat sources in such a way that the temperature differences in the direction of the flow lines and transversally to the same are maintained equal or inferior to certain threshold values.

7. Device for performing the method of claim 1 in order to achieve a thermal homogenization of a molten mass (1) which flows through an enclosure (2) covered by a slab (6) which has apertures (7) provided with horizontally mobile shutters (8), which device comprises burners (5) placed above the level of the molten mass in the lateral parts of the enclosure, and further heating means placed within the molten mass and/or recessed in the walls of the enclosure, means for measuring the temperature of said mass at the nodes of a three-dimensional grid of measuring points (9a, 9b, 9c), and an electrical regulating circuit which commands the amount of aperture of the shutters and also the thermal output of the burners and of the heating means in function of the performed measures.

8. Device according to claim 7, with shutters (8) which are mounted, either individually or in groups, in mobile frames resting on the slab (6) by means of rollers (17), and movable through the action of at least one jack.

9. Device according to claim 7 or 8, with pyrometric measuring rods (9) which are mounted on the slab (6) and which plunge into the molten mass.

10. Device according to claim 9, in which some rods comprise several thermocouples (9a, 9b, 9c) placed at different heights.

11. Device according to claim 9 or 10, in which several rods (9) are mounted on a single panel (41) transverse to the slab, and which carries one central rod and two lateral rods.

12. Device according to any of claims 9 through 11, in which at least one rod (9) comprises a tube (42) closed at one end and made of platinum rhodium crimped into at least one groove provided in a coaxial inner tube (40) made of aluminium oxide, which contains at least one thermocouple and which is protected against erosion by the one-ended tube.

13. Device according to any of claims 7 through 12, with radiation pyrometers (20) which are mounted on the slab (6) so as to measure the surface temperature of the molten mass.

14. Device according to any of claims 7 through 13, where the electrical regulating circuit is designed so as to weight with a factor smaller than one, and which may become zero, the signals emitted by any one of the measuring means whenever these signals are outside a first interval determined by the ensemble of all other measured values, and where said circuit is designed so as to trigger an attention signal when said values lie outside a second interval which contains at least the first.

15. Application of the method of claim 1, for the homogenization of the temperature of molten glass which flows along a channel made of refractory material.

Fig.1

Fig.2

Fig.3

Fig.4

Fig.5

Fig.6

Fig.7

Fig.8

Fig.9

Fig.10

Fig.11